Europäisches Patentamt

European Patent Office

Office européen des brevets

(11) Veröffentlichungsnummer: **0 486 725 A1**

# EUROPÄISCHE PATENTANMELDUNG

(21) Anmeldenummer: **90122382.6**

(22) Anmeldetag: **23.11.90**

(51) Int. Cl.⁵: **B60P 3/03**

(43) Veröffentlichungstag der Anmeldung:
**27.05.92 Patentblatt 92/22**

(84) Benannte Vertragsstaaten:
**AT BE CH DE DK ES FR GB GR IT LI LU NL SE**

(71) Anmelder: **KARL-HEINZ SCHEYDA GmbH**
**Kornharpener Strasse 263**
**W-4630 Bochum(DE)**

(72) Erfinder: **Scheyda, Karl-Heinz**
**Schützenstrasse 214**
**W-4630 Bochum 6(DE)**

(74) Vertreter: **Schulte, Jörg, Dipl.-Ing.**
**Hauptstrasse 2**
**W-4300 Essen-Kettwig(DE)**

(54) **Geldtransporter mit zwei oder mehr Sicherheitszonen und mittiger Ladezone.**

(57) Ein für den Transport von Wertgegenständen, insbesondere Geld vorgesehenes gepanzertes Kraftfahrzeug ist als rundum geschlossene Baueinheit ausgebildet, wobei sowohl Decke (4) wie Wände (5, 6) und Boden (7) einen gesicherten Kasten darstellen, der in mehrere Sicherheitszonen unterteilt ist, wobei das Fahrerhaus (11) eine eigene Sicherheitszone darstellt. Diese Baueinheit als geschlossener Kasten ist mit dem Fahrgestell (10) an mehreren Punkten (38, 39, 40, 41) lösbar verbunden, so daß er wasserdicht und optimal gesichert auch mehrfach eingesetzt werden kann. Teil dieser Baueinheit und des Gehäuses (21) ist eine das Fahrerhaus (11) überdeckende Kapuze (23), die somit auch diesen empfindlichen Bereich optimal absichert. Dadurch, daß im Heck (8) eine Außentür (36) vorgesehen ist, die die Maße von LZB-Containern (49) aufweist und dadurch, daß die Zwischenwände (27, 33, 33') zwischen Warte- (34) und Lagerraum (28) schwenkbar ausgebildet ist, kann der hintere Warteraum (34) so vergrößert werden, daß dort die Geldcontainer (49) optimal gelagert werden können.

EP 0 486 725 A1

Die Erfindung betrifft ein gepanzertes Kraftfahrzeug für den Transport von Wertgegenständen, insbesondere Geld, mit dem gepanzerten Aufbau, der auch das Fahrerhaus mit umfaßt und dessen entsprechend geschützter Innenraum in

Sicherheitszonen unterteilt ist, von denen die eine als Lagerraum und die andere als mit den Ausgangstüren versehener Warte- und Laderaum dient, wobei der Warteraum zwischen Hinterradachse und Fahrzeugheck liegt und über eine Geldschleuse mit dem Lagerraum verbunden ist.

Derartige gepanzerte Kraftfahrzeuge werden vor allem zum Transport von Papier- und Hartgeld eingesetzt. Obwohl die Industrie und der Handel im wesentlichen auf eine bargeldlose Lohnzahlung übergegangen sind, müssen immer noch erhebliche Mengen an Geld zwischen den einzelnen Geldinstituten und sonstigen Großabnehmern hin- und hergebracht werden. Zur Sicherheit des Personals wird auf die Fahrerhaustüren verzichtet, so daß auch dieser Bereich mit abgepanzert und gesichert werden kann. Fahrer und Beifahrer können nur über den Laderaum und eine Sicherheitszone aus dem Fahrzeug herausgelangen, wobei zur möglichst gleichmäßigen Belastung eines derartigen Kraftfahrzeuges gemäß der DE-GM 89 05 541 und 89 08 518 der Lagerraum ausschließlich zwischen den beiden Achsen angeordnet ist. Damit ist die Möglichkeit gegeben, zwischen die Hinterradachse und Fahrzeugheck einen Warteraum anzuordnen, in dem sich der Beifahrer so lange aufhalten kann, wie der Fahrer ihm aus dem Lagerraum heraus durch eine entsprechende Schleuse das Geld aushändigt, das er dann in gesicherten Taschen oder Containern zur Bank oder zum sonstigen Institut transportiert. Aufgrund der dann gleichmäßigen Beladung eines derartigen Kraftfahrzeuges ist sowohl das Lenken erleichtert als auch ein gesicherter Bremsweg vorgegeben, weil beide Achse, insbesondere aber die vordere Achse bei Vorderradantrieben immer gleichmäßig belastet ist. Nachteilig ist, daß der Lagerraum und das Fahrerhaus nur durch eine Prallwand getrennt sind, um bei plötzlichem Bremsmanövern oder ähnlichem den Fahrer nicht durch herumfliegende Kästen zu gefährden, daß aber eine sicherheitsmäßige Abtrennung des Fahrerhauses nicht möglich ist. Nachteilig ist außerdem, daß Decke und Wände sowie Boden getrennte Einheiten bilden, so daß eine Gefährdung von unten her nicht ganz ausgeschlossen und insbesondere das Eindringen von Feuchtigkeit nicht ganz verhindert werden kann. Außerdem ist eine Verbindung zwischen dem Aufbau und dem Fahrgestell vorgegeben, die aufwendig und noch zu wartungsintensiv ist.

Der Erfindung liegt daher die Aufgabe zugrunde, einen rundum gesicherten, zugleich wasserdichten und das Fahrerhaus mitabsichernden Geldtransporter für Gelder und Geldbehälter aller Art zu schaffen.

Die Aufgabe wird erfindungsgemäß dadurch gelöst, daß der Lagerraum und der Warteraum Teilbereiche eines Decke, Wände und Boden aufweisenden, eine geschlossene Baueinheit darstellenden, gepanzerten Gehäuses sind, das sich das Fahrerhaus kapuzenförmig überdeckend über die Vorderachse hinaus erstreckt und das durch Zwischenwände mit gegeneinander gesperrten und damit nur nacheinander zu öffnenden Türen in Lagerraum und Warteraum sowie Fahrerhaus unterteilt ist.

Damit sind zunächst einmal drei Sicherheitszonen geschaffen, nämlich das Fahrerhaus als solches, der Lagerraum und der Warteraum. In allen dreien kann sich der Fahrer bzw. der Beifahrer aufhalten, ohne daß er von außen her gefährdet ist. Dies wird noch dadurch begünstigt, daß der gesamte Lagerraum und Warteraum eine Baueinheit darstellt, die rundum gepanzert ist und die damit sowohl optimal mit dem Fahrgestell zu verbinden wie als solche sicher und wasserdicht gestaltet werden kann. Da die Baueinheit als solche mit dem Fahrgestell verbunden wird, ist die Möglichkeit gegeben, durch Lösen der vorgegebenen Verbindungen, beispielsweise Schrauben, das Fahrgestell nach Ablauf der üblichen Fahrbelastung von dem Aufbau zu trennen und den Aufbau als solchen nach entsprechender Aufarbeitung wieder erneut einzusetzen. Damit werden die Standzeiten solcher Baueinheiten wesentlich vergrößert. Darüber hinaus kann auch das Fahrerhaus gleichzeitig mit abgesichert werden, in dem nämlich ein Ansatz der Baueinheit bzw. ein Teilbereich der Baueinheit als Kapuze über das Fahrerhaus gesetzt wird, von dem lediglich vorher die Seiten- und Frontscheiben entfernt worden sind. Dies hat nicht nur montagemäßige Vorteile, sondern auch sicherheitsmäßige Vorteile, da auch der gesamte vordere Bereich des Kraftfahrzeuges optimal gesichert ist. Insgesamt gesehen ist damit ein Kraftfahrzeug geschaffen, das gerade für den vorgesehenen Transport von Wertgegenständen und dabei wiederum von Geld vor allem dem Fahrer und dem Beifahrer eine größtmögliche Sicherheit gewährt und daß sowohl durch die Ausbildung der gesamten Baueinheit als solcher wie auch durch die geschaffene Unterteilung in verschiedene Sicherheitszonen, in denen sich die beiden Bedienungsleute optimal gesichert bewegen können, ohne daß sie von außen her ohne weiteres eingesehen werden können. Damit ist ihnen die Möglichkeit gegeben, die vorbereitenden Arbeiten, d.h. das Umladen bzw. Entladen und auch Beladen im jeweils soweit wie nur eben möglich gesicherten Bereich vorzunehmen, bevor sie dann mit entsprechend gesicherten Containern bzw. Taschen nach außen gehen, um die Gefahrenzone dann schnell zu durchschreiten und wiederum in den gesicherten Bereich der Bank oder des sonstigen Geldinstitutes hineinzugelangen.

Nach einer zweckmäßigen Ausbildung der Erfindung ist vorgesehen, daß heckseitig eine den Durchtritt von Geldcontainern zulassende Außentür vorgesehen ist und daß die Lagerraum und Warteraum unterteilende Zwischenwand auf oder vor der Hinterradachse verlaufend angeordnet ist. Damit ist gleichzeitig auch die Möglichkeit gegeben, mit einem derartigen Fahrzeug gesichert Geldcontainer insgesamt aufzunehmen, um sie als solche zu transportieren und am Zielpunkt wieder auszuladen und abzuliefern. Ein Umladen im Bereich des Geldtransporters erübrigt sich, wobei zum Beladen und Entladen der Geldcontainer mit Auflaufschrägen oder ähnlichen Hilfsmitteln gearbeitet werden kann, wobei sich als vorteilhaft herausstellt, daß der Boden des Geldtransporters nur unwesentlich höher liegt, als bei ungepanzerten Fahrzeugen. Das Beladen mit den Containern kann dabei so erfolgen, daß entweder der Container in den Lagerraum durchgeschoben wird, wozu dann die Tür in der Zwischenwand entsprechend breit ausgebildet werden muß oder aber durch Versetzen der Zwischenwand, wie erfindungsgemäß vorgesehen, um auf diese Art und Weise den Container in der eigentlichen Wartezone lagern zu können. Dies hat den Vorteil, daß der Container schneller eingeladen und auch schneller wieder ausgeladen werden kann.

Eine weitere zweckmäßige Ausbildung sieht vor, daß die Zwischenwände, vorzugsweise die Zwischenwand zwischen Lagerraum und Warteraum über Scharniere mit den Wänden und lösbar mit dem Boden und/oder der Decke verbunden sind. Dadurch ist die Möglichkeit gegeben, die Zwischenwände dort zu lassen, wo sie auch bisher angeordnet waren, nämlich hinter der Hinterradachse, da man ja nur einen relativ schmalen Warteraum benötigt, was den Vorteil hat, daß für die übliche Beladung nach wie vor ein sehr großvolumiger Lagerraum zur Verfügung steht. Vorteilhaft dabei ist, daß die Zwischenwände, die vorzugsweise vom Lagerraum her zu lösen sind bzw. zum Klappen vorzubereiten sind, so weit weggeschwenkt werden können, daß dann für die Container ein großer Raum vorhanden ist, in dem in der Regel zwei oder sogar mehr Container geladen werden können. Diese Geldcontainer, die vor allen Dingen von den Landeszentralbanken immer mehr vorgegeben werden, sind genormt, so daß aufgrund der vorgenommenen Anpassung bei der Außentür und bei den Zwischenwänden bzw. den dort vorgesehenen Türen ein einwandfreies Passieren gesichert ist. Die Geldcontainer sind mit Rädern versehen, so daß sie verhältnismäßig leicht geschoben und damit auch innerhalb des Geldtransporters ohne Probleme an den jeweiligen Standort gebracht werden können. Dabei ist es von Vorteil, wenn an den jeweiligen Standpunkten der Geldcontainer Halterungen vorgesehen sind, um den Geldcontainer in der einmal eingenommenen Position zu fixieren und ein Verschieben und Hin- und Herrollen während der Fahrt sicher zu verhindern. Im übrigen aber sind die Zwischenwände ja als Bremswände sowieso vorhanden, wobei sie bei der erfindungsgemäßen Ausbildung so vorgesehen sind, daß sie eben den Containermaßen entsprechend deren Fixierung begünstigen.

Die Verbindung des ein insgesamt gesichertes und gepanzertes Bauteil darstellenden Gehäuses mit dem Fahrgestell wird dadurch begünstigt, daß dem Boden des Gehäuses Verbindungsschrauben mit den Verbindungspunkten am Fahrgestell korrespondierend zugeordnet sind. Diese Verbindungsschrauben können entweder durch den Boden hindurchführen oder aber so angebracht werden, daß sie von unten her durch das Fahrgestell und die dort vorgesehenen Verbindungspunkte hindurch in den Boden eingeschraubt werden, wodurch sich eine optimale Fixierung ergibt. Vorteilhaft ist dabei insbesondere, daß bei insgesamt in der Regel acht oder zehn Verbindungspunkten ein relativ schnelles Lösen möglich ist, andererseits aber eine sichere Fixierung beider Baueinheiten vorhanden ist, die beim Transport ein Lösen sicher verhindern. Darüber hinaus können die Verbindungsschrauben so ausgebildet werden, daß sie von unberechtigten Dritten nicht betätigt werden können, so daß auch Sabotageakte ausgeschlossen sind.

Weiter vorne ist bereits erläutert worden, daß der Geldtransporter insgesamt drei getrennte Sicherheitsschleusen besitzt, wovon eine das Fahrerhaus betrifft. Eine optimale Sicherung ist insbesondere dadurch erreicht, daß auch die Zwischenwand zwischen Fahrerhaus und Lagerraum eine mit in das Sicherheitssystem eingeschlossene Sicherheitsschleuse aufweist. Damit ist sichergestellt, daß diese Sicherheitsschleuse bzw. die entsprechende Tür erst geöffnet werden kann, wenn beispielsweise die Tür in der den Lagerraum und den Warteraum unterteilenden Zwischenwand geschlossen ist, so daß dann eine entsprechend vorteilhafte Abschottung vorhanden ist. Umgekehrt kann auch die Tür in der Zwischenwand zwischen Lagerraum und Warteraum erst geöffnet werden, wenn die zum Fahrerhaus führende Sicherheitsschleuse geschlossen ist.

Aufgrund der geschlossenen Bauweise der Baueinheit ist der Innenraum des Geldtransporters gegen die Umwelt wasserdicht abgeschottet. Damit ist ausgeschlossen, daß Feuchtigkeit, insbesondere das Papiergeld beeinträchtigen kann, in diesen Lagerraum oder auch in die anderen Sicherheitszonen hineinkommt, so daß der Innenraum insgesamt vorteilhaft gesichert ist. Gegen Fremdbeeinflussung ist dieser Innenraum durch Dural-Aluminium-Platten gesichert, die das Gehäuse rundum abdecken. Die Dural-Aluminium-Platten haben vorteilhaft ein geringeres Gewicht als vergleichbarer Stahl oder sonstige Sicherungsplatten, erfüllen aber dennoch die Voraussetzungen der entsprechenden Beschußklassen. Um das Beladen und Entladen mit Geldcontainern zu erleichtern, sieht die Erfindung vor, daß die heckseitige Außentür von einer die Geldcontainer anhebenden Klappbühne gebildet ist. Die Klappbühne hebt zunächst einmal den Geltcontainer von der Straße bzw. vom Bürgersteig aus bis in Höhe des Bodens an, woraufhin dann der Geldcontainer in den Warteraum hineingerollt wird, woraufhin dann die Klappbühne sich vor die entsprechende Öffnung der Außentür setzt und diese gleichzeitig bildend diese Öffnung sicher verschließt. Ähnliche Lösungen sind von Fahrzeugen bekannt, die zum Transport von Lebensmittelpaletten und ähnlichem eingesetzt werden.

Eine weitere Möglichkeit der Erleichterung des Beund Entladens mit Geldcontainern ist die, bei der heckseitig ein einen Schwenkarm aufweisender Hubkran angeordnet und die Außentür auf die Maße von Geldcontainern verbreitert nach außen öffnend angeschlagen ist. Dadurch daß die Tür nach außen öffnend angeschlagen ist, kann sie ohne weiteres den Maßen der Geldcontainern angepaßt werden, da sie auch bei entsprechend schmalem Warteraum ohne Probleme geöffnet werden kann. Weiter ist es dabei möglich, auch die in der Zwischenwand angeordnete Tür soweit zu vergrößern, daß der Geldcontainer nach Schließen der Außentür bis in den Lagerraum hineingeschoben werden kann. Der Hubkran kann dabei auch so verwendet werden, daß er lediglich den Geldcontainer über eine entsprechende Ladebühne in den Warteraum hineinzieht, so daß mit einfacheren Hilfsmitteln gearbeitet werden kann. Denkbar ist es aber auch, heckseitig eine Hubbühne vorzusehen, die durch die Außentür in den Warteraum einschwenkbar ausgebildet ist, so daß der Geldcontainer zusammen mit der Hubbühne in das Fahrzeug hineingeschwenkt werden kann, um dann erst den Geldcontainer von der Hubbühne herabzuschieben oder aber ihn auf der Hubbühne stehend zu transportieren. Denkbar ist es schließlich, dem Geldtansporter einen Anhänger zuzuordnen, der mit einer entsprechenden Ladeschräge versehen werden kann, um das Beladen und Entladen der Geldcontainer zu erleichtern. Eine solche Anordnung hat den Vorteil, daß ein gezielt auf den Transport von Geldcontainern ausgebildeter Anhänger zum Einsatz kommen kann, der darüber hinaus mit einem niedrig liegenden Boden ausgerüstet ist.

Um auch das Hantieren mit dem Hartgeld zu erleichtern, das ja ein erheblich größeres Gewicht als das Papiergeld hat, sieht die Erfindung vor, daß die Zwischenwand zwischen Lagerraum und Warteraum neben der Papiergeldschleuse auch eine Hartgeldschleuse aufweist. Diese Hartgeldschleuse, die einen relativ geringen Öffnungsquerschnitt hat, ermöglicht das Durchreichen von Geldsäcken, ohne daß damit der Lagerraum gefährdet ist, weil die Hartgeldschleuse ja zwischen den beiden Sicherheitszonen ausgebildet ist, ohne daß eine Verbindung mit der Außenwelt besteht.

Weiter vorne ist darauf hingewiesen worden, daß die Türen im Bereich des Fahrerhauses entfallen, um eine optimale Sicherung zu gewährleisten. Bei einem Unfall eines derartigen Geldtransporters ist aber nicht auszuschließen, daß der Geldtransporter umkippt und sich auf die Seite legt. Der Fahrer oder der Beifahrer, selbst wenn sie verletzt sind, können aber zunächst einmal in den Lagerraum gelangen, da die Tür in der Zwischenwand entsprechend ausgebildet ist. Auch in der zweiten Zwischenwand zwischen Lagerraum und Warteraum ist die Tür für sie ohne Probleme zu öffnen. Um dann in die Freiheit zu gelangen, sieht die Erfindung vor, daß zusätzlich zur heckseitigen Außentür in beide Wände integrierte, nach innen schwenkbare Türen im Warteraum vorgesehen sind. Damit hat der Fahrer bzw. der Beifahrer die Möglichkeit, die praktisch über ihm liegende Tür zu öffnen, die dann automatisch nach innen schwenkt, so daß er keine Kraft aufwenden muß, um sie zu öffnen. Er kann dann aus der Öffnung aus dem Geldtransporter herausklettern und ggf. Hilfe holen.

Insbesondere dann, wenn die Zwischenwand zwischen Lagerraum und Warteraum zum Einladen der Geldcontainer weggeklappt werden soll, ist eine weitere Ausbildung der Erfindung vorteilhaft, nach der im Lagerraum an den Wänden angeordnete, klappbar ausgebildete Regale vorgesehen sind. Damit ist dem Bedienungspersonal nach wie vor eine optimale Lagerungsmöglichkeit gegeben, wobei sie bei Bedarf die Regale wegklappen können, die dann keine Behinderung mehr darstellen. Andererseits können sie nach dem Zurückklappen der Zwischenwand dann auch wieder die Regale aufklappen, so daß dann der Geldtransporter wieder für den Transport herkömmlicher Galdbehältnisse eingesetzt werden kann.

Die Erfindung zeichnet sich insbesondere dadurch aus, daß ein rundum gesicherter und zugleich wasserdichter, das Fahrerhaus mitabsichernder Geldtransporter geschaffen ist. Dieser Geldtransporter eignet sich gleichzeitig auch zum Transport der heute immer üblicher werdenden LZB-Geldcontainer, die als gesicherte Einheit den Weg zwischen Geldtransporter und Geldinstitut zusätzlich absichern sollen. Das gesamte Fahrzeug ist in drei Sicherheitszonen unterteilt, wobei das Fahrerhaus vorteilhaft eine eigene Sicherheitszone darstellt, wodurch eine weitere Optimierung des Schutzes des Bedienungspersonals gewährleistet ist. Insbesondere ist es möglich, wenn einmal durch widrige Umstände ein Geldräuber in den Lagerraum eingedrungen sein sollte, der Fahrer selbst von ihm nicht bedroht werden kann bzw. der Fahrer vor jedweden Bedrohungen sicher ist. Insgesamt gesehen ist der Aufbau des Geldtransporter eine Baueinheit, die als solche mit dem Fahrgestell verbunden wird und auch von diesem wieder gelöst werden kann, so daß eine derartige Baueinheit beispielsweise auch auf anderen Fahrgestellen des Typs erneut eingesetzt werden kann, ohne daß eine Umrüstung erforderlich wird. Vorteilhaft ist weiter die vollständig Wasserdichte Ausführung, da die Baueinheit als solche einen rundum geschlossenen Kasten darstellt.

Weitere Einzelheiten und Vorteile des Gegenstandes der Erfindung ergeben sich aus der nachfolgenden Beschreibung der zugehörigen Zeichnung, in der ein bevorzugtes Ausführungsbeispiel mit den dazu notwendigen Einzelheiten und Einzelteilen dargestellt ist. Es zeigen:

Fig. 1    eine Seitenansicht des Geldtransporters,

Fig. 2    eine Vorkopfansicht des Geldtransporters,

Fig. 3    eine Draufsicht im aufgeschnittenen Zustand,

Fig. 4    eine Aufsicht auf das Fahrgestell,

Fig. 5    eine Rückansicht des Geldtransporters,

Fig. 6    eine Draufsicht auf den Heckbereich des Geldtransporters,

Fig. 7    eine räumliche Darstellung des Heckbereiches,

Fig. 8    eine weitere räumliche Darstellung des Heckbereiches ohne Fahrgestell und

Fig. 9    eine Draufsicht auf den Heckbereich mit Hubbühne.

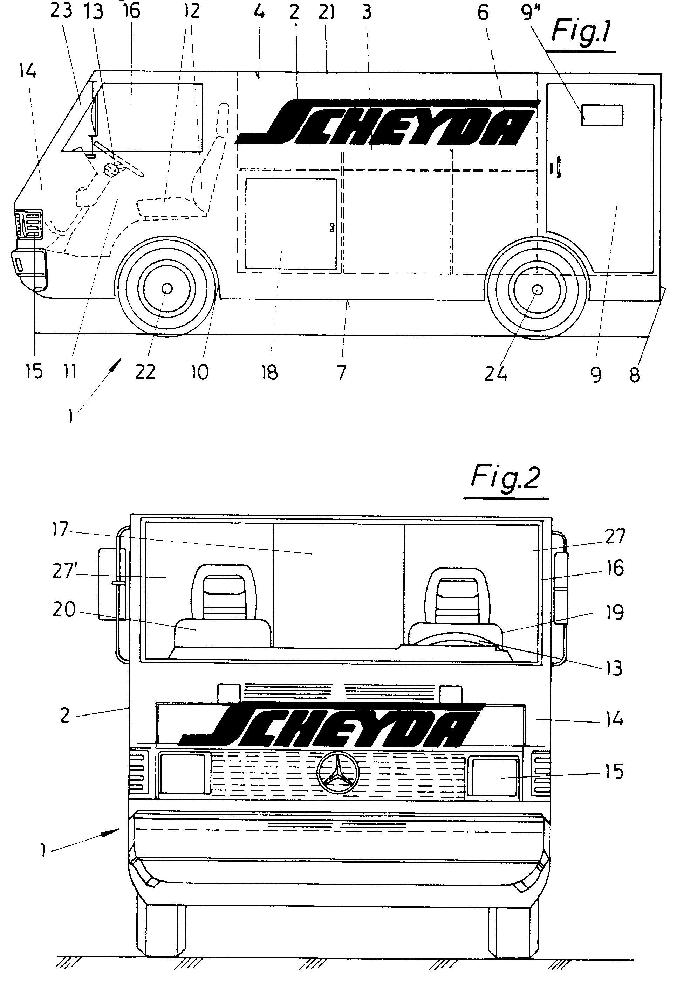

Fig. 1 gibt einen Geldtransporter (1) wieder, der einen rundum gepanzerten Aufbau (2) aufweist. Dadurch ergibt sich ein entsprechend geschützter Innenraum (3), der rundum einen Decke (4), Wände (5, 6) und Boden (7) aufweisenden Kasten darstellt, wodurch sich eine optimale Sicherung dieses Bereiches ergibt. Der Innenraum (3) ist mehrfach unterteilt, wie weiter hinten noch erläutert ist.

Im Bereich des Hecks (8) des Geldtransporters (1) befinden sich beidseitig Türen (9), die mit einem Fenster (9'') ausgerüstet sind, um dem in dem Innenraum (3) befindlichen Beifahrer die Möglichkeit zu geben, von innen her die Situation zu überprüfen.

Der gepanzerte Aufbau (2) ist mit einem Fahrgestell (10) verbunden, von dem das Fahrerhaus (11) weitgehend ohne Umbau erhalten geblieben ist. Der Sitz (12) und das Steuerrad (13) sind an der üblichen Stelle, während der Aufbau (14) in diesem Bereich wie auch der gesamte gepanzerte Aufbau (2) durch Dural-Aluminium-Platten gesichert wird.

Die Lampe (15) ist wie Fig. 2 auch verdeutlicht, in den Aufbau (14) eingelassen; die Seitenfenster (16) und das Frontfenster (17) bestehen aus entsprechendem Sicherheitsglas.

Unmittelbar hinter dem Fahrerhaus (11) bzw. hinter dem Fahrersitz (19) befindet sich eine Sicherheitstür (18) bzw. eine Fluchttür, die nur vom Innenraum (3) aus geöffnet werden kann. Dadurch ist dem Fahrer oder auch dem Beifahrer die Möglichkeit gegeben, im Notfall das Fahrzeug auch von dem Innenraum (3) aus verlassen zu können, ohne dazu die Türen (9) bedienen zu müssen.

Fig. 2 zeigt eine Vorkopfansicht, wobei deutlich wird, daß sowohl der Fahrersitz (19) wie der Beifahrersitz (20) an ihrer üblichen Stelle verblieben sind, während sie der gesamte gepanzerte Aufbau (2) im vorderen Bereich in Form einer Haube als geschlossenes Gehäuse (21) umgibt. Diese Haube, die Teil des Gehäuses (21) ist, erstreckt sich über die Vorderradachse (22) hinweg, wobei durch das gesonderte Bezugszeichen (23) dargestellt ist, daß dieser Kapuze durchaus eine besondere Bedeutung zukommt, weil auf diese Art und Weise unter weitgehender Beibehaltung des Fahrerhauses das geschlossene Geldtransportfahrzeug geschaffen werden kann. Dieses geschlossene Geldtransporterfahrzeug hier (1) mit dem gepanzerten Aufbau (2) erstreckt sich von der Vorderradachse bzw. von einem Bereich vor der Vorderradachse (22) bis über die Hinterradachse (24) hinaus, wobei durch die Tür (9) hier angedeutet ist, daß sich dort eine besondere Sicherheitszone befindet, die für das Bedienungspersonal eine zusätzliche Sicherung mit sich bringt.

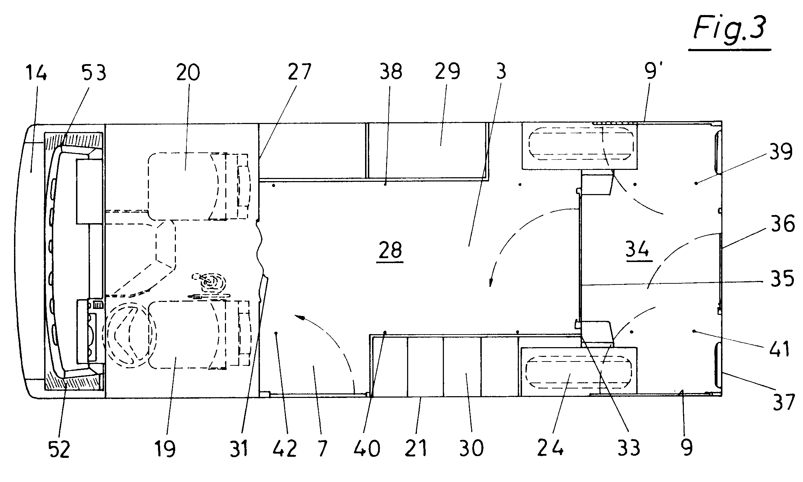

Fig. 3 gibt die Aufteilung des Innenraums (3) wieder und verdeutlicht außerdem, daß bei entsprechender Ausbildung der Zwischenwand (27) der gesamte Innenraum (3) in insgesamt drei Sicherheitszonen unterteilt ist, wobei das Fahrerhaus (11) eine eigene Sicherheitszone darstellt.

Die Zwischenwand (27) unterteilt den Innenraum (3) in Fahrerhaus (11) und Lagerraum (28), wobei im Lagerraum (28) mehrere Regale (29, 30) vorgesehen sind, um die unterschiedlichen Geldbehälter oder Transportmittel sicher und auch übereinander lagern zu können. In der Zwischenwand (27) ist die Sicherheitsschleuse (31) vorgesehen, die in das gesamte Sicherheitssystem so eingeschlossen ist, daß auch diese Sicherheitsschleuse (31) nur dann öffnet, wenn die anderen Sicherheitsschleusen geschlossen sind.

Der Lagerraum (28) ist dann noch einmal unterteilt, wozu die Zwischenwand (33) dient. Jenseits der Zwischenwand (33) bis zum Heck (8) erstreckt sich dann der Warteraum (34), wobei in der Zwischenwand (33) eine Tür (35) vorsehen ist, durch die der Beifahrer oder auch der Fahrer in den Warteraum (34) gelangen können.

Der Warteraum (34) ist nach außen hin durch die Türen (9, 9') sowie durch die Außentür (36) gesichert. Diese Außentür (36) im Heck (8) bzw. in der Rückwand (37) ist größer bemessen, um wie weiter vorne erläutert auch größere Geldtransportmittel einladen bzw. ausladen zu können.

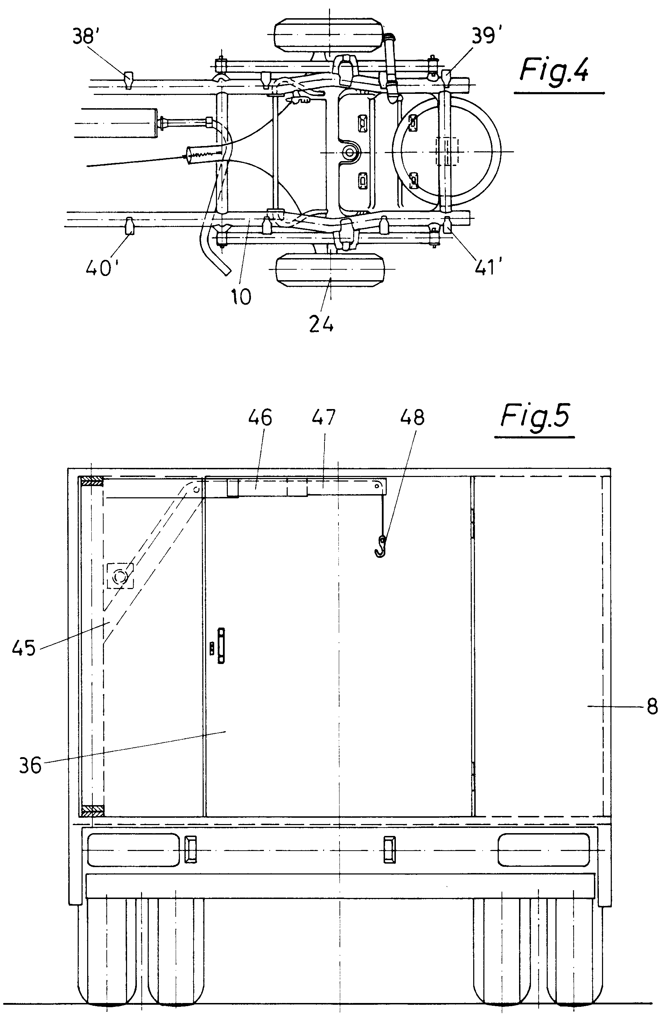

Am Boden (7) im Bereich des Lagerraums (28) und des Warteraums (34) sind mehrere Verbindungspunkte (38, 39, 40, 41) vôrgesehen, die mit denen aus Fig. 4 ersichtlichen Verbindungspunkten (38', 39', 40', 41') übereinstimmen, so daß auf diese Art und Weise mit Hilfe von Verbindungsschrauben (42) die notwendige Verbindung zwischen Fahrgestell (10) und gepanzertem Aufbau (2) ohne großen Aufwand hergestellt werden kann.

Die Rückansicht eines derartigen Geldtransporters (1) ist Fig. 5 zu entnehmen. Dabei wird deutlich, daß die Außentür (36) soweit vergrößert ist, daß auch Geldcontainer ein- und ausgeladen werden können. Zur Erleichterung dieser Arbeiten ist hier ein Hubkran (45) angedeutet, der über einen Schwenkarm (46) mit Zughaken (48) verfügt. Der Schwenkarm (46) weist ein Teleskop (47) auf, so daß er verlängert und verkürzt werden kann, um beispielsweise einen am Zughaken (48) befestigten Geldcontainer in den Geldtransporter hineinzuziehen oder ihn langsam ablaufen zu lassen. Diese Geldcontainer sind nämlich mit Rädern versehen.

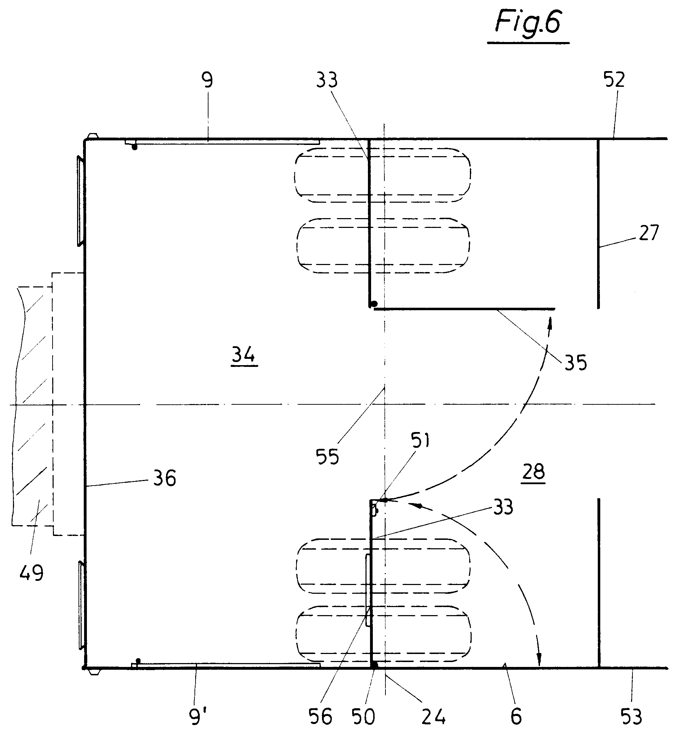

Anhand der Fig. 5 ist das Einladen und Ausladen von Geldcontainern erläutert worden, wobei Fig. 6 einen solchen Geldcontainer (49) andeutet. Dieser Geldcontainer (49) wird durch die Außentür (36) in den Bereich des Warteraums (34) hineingezogen oder gehoben, um hier abgestellt zu werden. Darüber hinaus kann er aber auch in den Lagerraum (28) gebracht werden, wenn dies erforderlich ist, wozu die Zwischenwand (33) mit einem Scharnier (50) versehen ist. Dadurch kann die Zwischenwand an die Wand (6) herangeschwenkt und hier beispielsweise festgelegt werden, so daß dann Geldcontainer auch in diesen Bereich hineingefahren werden können.

Will man aber die beiden Sicherheitszonen, dargestellt durch den Lagerraum (28) und dem Warteraum (34) erhalten, so vergrößert man zweckmäßigerweise die Tür (35) in der Zwischenwand (33), so daß dann die Geldcontainer auch in diesen Bereich hineingefahren bzw. geschoben werden können.

Die Tür (35) dient gleichzeitig als Papiergeldschleuse (55), wobei über den Druckknopf (51) das Öffnen und Schließen dieser Tür (35) ermöglicht ist.

Der Gesamtbereich des Aufbaues (2) ist wie weiter vorne erläutert durch Alu-Platten (52, 53) abgesichert, ohne daß hier Einzelheiten dazu dargestellt sind.

In der Zwischenwand (33) ist auch eine Hartgeldschleuse (56) vorgesehen, durch die hindurch Hartgeld vom Lagerraum (28) in den Warteraum (34) gegeben werden kann, ohne daß die Tür (35) geöffnet werden muß.

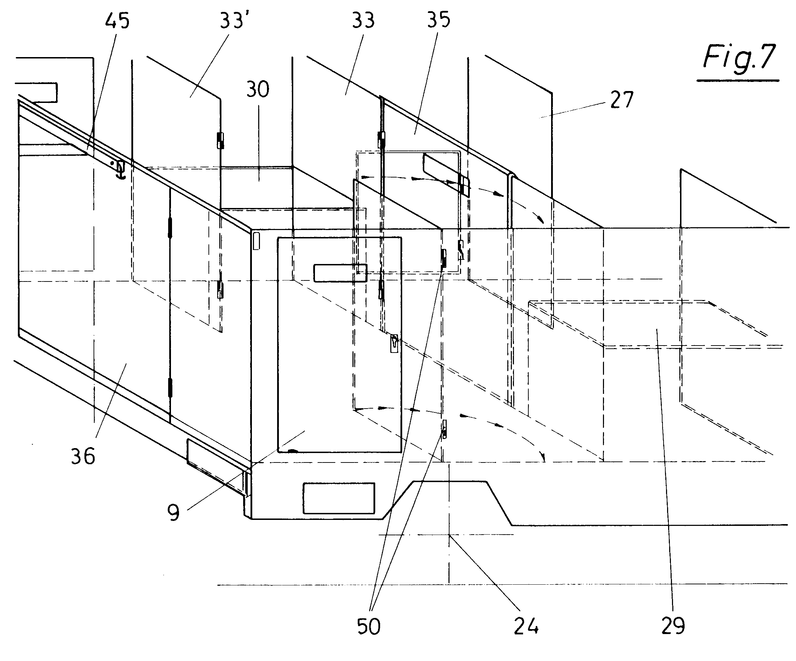

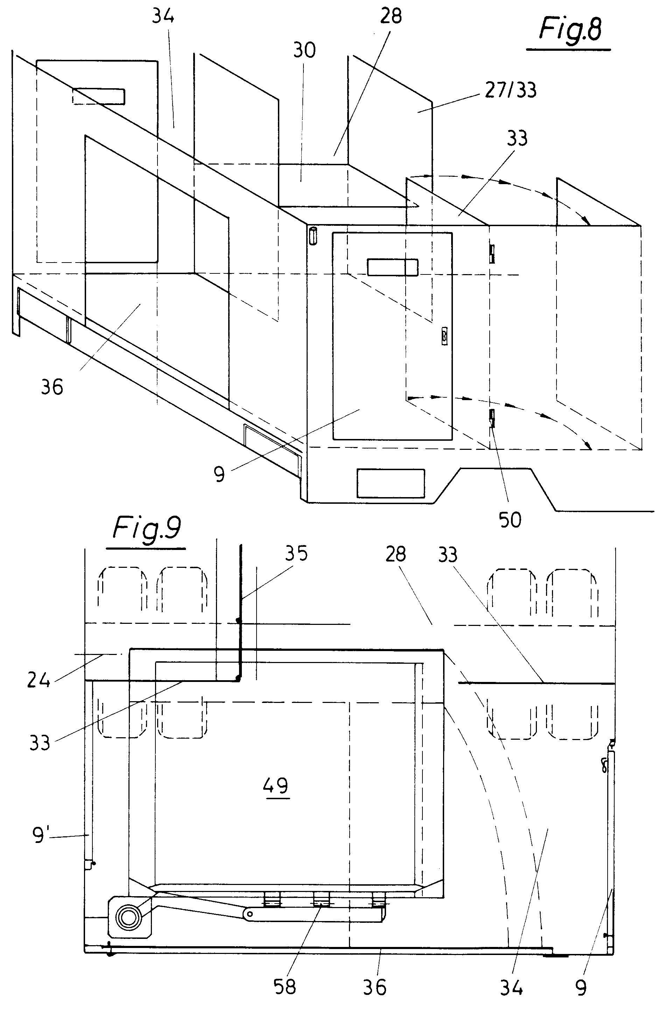

Die Figuren 7 und 8 zeigen perspektivische Darstellungen des Heckbereiches eines derartigen Geldtransporters (1). Deutlich wird hier in Fig. 7 noch einmal, daß durch die Außentür (36) hindurch Geldcontainer (49) eingeladen werden können, wozu als Hilfsmittel der Hubkran (45) dient. Die Zwischenwand (33, 33') ist mit Scharnieren versehen und kann weggeschwenkt werden, ähnlich wie auch die Regale (29 und 30). Bei der aus Fig. 7 erläuterten Ausbildung ist praktisch noch eine zusätzliche Sicherheitszone geschaffen, da eine ergänzende Zwischenwand (33) bzw. (33') vorgesehen ist, was insbesondere beim Transport der Geldcontainer (49) vorteilhaft ist, weil sich dann im Heckbereich ein entsprechend vergrößerter Warteraum (34) ergibt, der dann gleichzeitig als Lagerraum für die Geldcontainer (49) dient. Nach Fig. 8 sind wiederum wie auch aus Fig. 3 ersichtlich drei Sicherheitszonen geschaffen, wobei hier nur die beiden durch die Zwischenwände (27, 33) abgeteilten Sicherheitszonen dargestellt sind.

Fig. 9 zeigt eine Draufsicht auf den Heckbereich, wobei hier eine Bühne (58) zum Anheben und Verschwenken der Geldcontainer (49) dargestellt ist. Eine entsprechend vergrößerte Außentür (36) ermöglicht das Hereinschwenken der Bühne (58) mit dem Geldcontainer, wobei dieser dann entweder auf der Hubbühne (58) verbleibt oder aber von ihr herab beispielsweise in den Lagerraum (28) hineingeschoben wird.

Alle Merkmale, auch die nur in den Zeichnungen offenbarten, sind als erfindungswesentlich anzusehen.

**Patentansprüche**

1. Gepanzertes Kraftfahrzeug für den Transport von Wertgegenständen, insbesondere Geld, mit dem gepanzerten Aufbau, der auch das Fahrerhaus mit umfaßt und dessen entsprechend geschützter Innenraum in Sicherheitszonen unterteilt ist, von denen die eine als Lagerraum und die andere als mit den Ausgangstüren versehener Warte- und Laderaum dient, wobei der Warteraum zwischen Hinterradachse und Fahrzeugheck liegt und über eine Geldschleuse mit dem Lagerraum verbunden ist, **dadurch gekennzeichnet,** daß der Lagerraum (28) und der Warteraum (34) Teilbereiche eines Decke (4), Wände (5, 6) und Boden (7) aufweisenden, eine geschlossene Baueinheit darstellenden, gepanzerten Gehäuses (21) sind, das sich das Fahrerhaus (11) kapuzenförmig überdeckend über die Vorderachse (22) hinaus erstreckt und das durch Zwischenwände (27, 33) mit gegeneinander gesperrten und damit nur nacheinander zu öffnenden Türen (31, 35) in Lagerraum und Warteraum sowie Fahrerhaus unterteilt ist.

2. Geldtransporter nach Anspruch 1,
   **dadurch gekennzeichnet,**
   daß heckseitig eine den Durchtritt von Geldcontainern (49) zulassende Außentür (36) vorgesehen ist und daß die Lagerraum (28) und Warteraum (34) unterteilende Zwischenwand (33) auf oder vor der Hinterradachse (24) verlaufend angeordnet ist.

3. Geldtransporter nach Anspruch 1 und Anspruch 2,
   **dadurch gekennzeichnet,**
   daß die Zwischenwände (27, 33), vorzugsweise die Zwischenwand (33) zwischen Lagerraum (28) und Warteraum (34) über Scharniere (50) mit den Wänden (5) und lösbar mit dem Boden (7) und/oder der Decke (4) verbunden sind.

4. Geldtransporter nach Anspruch 1,
   **dadurch gekennzeichnet,**
   daß dem Boden (7) des Gehäuses (21) Verbindungsschrauben (42) mit den Verbindungspunkten (38, 39, 40, 41) am Fahrgestell (10) korrespondierend zugeordnet sind.

5. Geldtransporter nach Anspruch 1,
   **dadurch gekennzeichnet,**
   daß auch die Zwischenwand (27) zwischen Fahrerhaus (11) und Lagerraum (28) eine mit im Sicherheitssystem eingeschlossene Sicherheitsschleuse (31) aufweist.

6. Geldtransporter nach Anspruch 1,
   **dadurch gekennzeichnet,**
   daß das Gehäuse (21) rundum mit Dural-Aluminium-Platten (52, 53) abgedeckt ist.

7. Geldtransporter nach Anspruch 1 und Anspruch 2,
   **dadurch gekennzeichnet,**
   daß die heckseitige Außentür (36) von einer die Geldcontainer (49) anhebenden Klappbühne gebildet ist.

8. Geldtransporter nach Anspruch 1 und Anspruch 2,
   **dadurch gekennzeichnet,**
   daß heckseitig ein einen Schwenkarm (46) aufweisender Hubkran (45) angeordnet und die Außentür (36) auf die Maße von Geldcontainern (49) verbreitert nach außen öffnend angeschlagen ist.

9. Geldtransporter nach Anspruch 1 und Anspruch 2,
   **dadurch gekennzeichnet,**
   daß heckseitig eine Hubbühne (58) vorgesehen ist, die durch die Außentür (36) in den Warteraum (34) einschwenkbar ausgebildet ist.

10. Geldtransporter nach Anspruch 1,
    **dadurch gekennzeichnet,**
    daß die Zwischenwand (33) zwischen Lagerraum (28) und Warteraum (34) neben der Papiergeldschleuse (55) auch eine Hartgeldschleuse (56) aufweist.

11. Geldtransporter nach Anspruch 1,
    **dadurch gekennzeichnet,**
    daß zusätzlich zur heckseitigen Außentür (36) in beide Wände (5, 6) integrierte, nach innen schwenkbare Türen (9) im Warteraum (34) vorgesehen sind.

12. Geldtransporter nach Anspruch 1,
    **dadurch gekennzeichnet,**
    daß im Lagerraum (28) an den Wänden (5, 6) angeordnete, klappbar ausgebildete Regale (29, 30) vorgesehen sind.

_Fig.1_

_Fig.2_

Fig.3

*Fig.4*

*Fig.5*

*Fig.6*

Fig.7

27

29

35

33

33'

30

45

9

24

50

36

Fig.8

Fig.9

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X | GB-A-1 501 166 (SECURICOR) * Ansprüche 1,16; Seite 1, Zeile 82 - Seite 2, Zeile 45; Figuren 1,2 * | 1,2,5,7 | B 60 P 3/03 |
| A | --- | 11,12 | |
| X | DE-A-4 005 124 (SCHEYDA) * Ansprüche 1-3,10; Spalte 2, Zeilen 45-54; Spalte 4, Zeilen 56-64; Figuren 1,2 * | 1,2,10-12 | |
| Y | --- | 4,6,8,9 | |
| Y | FR-A-2 521 501 (INDUSTRIAL PERFORMANCES) * Seite 4, Zeile 32 - Seite 5, Zeile 18; Figur 5 * --- | 4 | |
| Y | FR-A-2 447 272 (BRINK'S FRANCE) * Ansprüche 1,2; Seite 6, Zeile 29 - Seite 7, Zeile 10; Figur 2 * --- | 6 | |
| Y | FR-A-2 580 563 (AMOUR) * Ansprüche 1,2; Figuren 1-3 * --- | 8 | |
| Y | EP-A-0 049 582 (STOWALIFT) * Ansprüche 1-5,12,13; Figuren 1-3 * --- | 9 | |
| A | EP-A-0 021 125 (THIELE & CO.) --- | | |
| A | DE-U-8 814 063 (GARNY SICHERHEITSTECHNIK) ----- | | |

**RECHERCHIERTE SACHGEBIETE (Int. Cl.5)**

B 60 P

Der vorliegende Recherchenbericht wurde für alle Patentansprüche erstellt

| Recherchenort | Abschlußdatum der Recherche | Prüfer |
|---|---|---|
| DEN HAAG | 16-07-1991 | NORDLUND J.O. |

EPO FORM 1503 03.82 (P0403)